# EUROPEAN PATENT SPECIFICATION

(11) **EP 2 632 027 B1**
(45) Date of publication and mention of the grant of the patent: **27.12.2017**
(21) Application number: 13169149.5
(22) Date of filing: 14.07.2009
(51) Int. Cl.: H02K 1/27, H02K 21/24, H02K 9/19

(54) **Axial flux machine**
Axialströmungsmaschine
Machine à flux axial

(30) Priority: 16.07.2008 GB 0813032; 08.05.2009 GB 0907982
(43) Date of publication of application: 28.08.2013
(62) Divisional of application: 09784734.7
(73) Proprietor: Cummins Generator Technologies Limited, Stamford, Lincolnshire PE9 2NB (GB)
(72) Inventor: Abdelslam, Mebarki, Stamford, Lincolnshire PE9 1AW (GB); Gurpreet, Saini, Peterborough, Cambridge PE1 4SB (GB); Thiagarajan, Gopinath, Thelungupalayam, Stamford, Lincolnshire PE9 1LF (GB); Shanel, Martin, Deeping St James, Peterborough PE6 8QA (GB); Adrian, Bell, Oakham, Rutland LE15 7DJ (GB); Richard, Gray, Sleaford, Lincolnshire NG34 0LD (GB); Neil, Brown, Holbeach, Lincolnshire PE12 8PB (GB)
(74) Representative: Williams, Michael Ian

(56) References cited:
- WO-A-94/22204
- WO-A1-2005/022725
- WO-A2-02/089292
- JP-A- 2006 271 161
- US-A1- 2004 195 932

## Description

The present invention relates to an axial flux rotating electrical machine, such as a generator or motor, and in particular techniques for retaining the stator in an axial flux machine.

Axial flux rotating electrical machines differ from conventional radial flux machines in that the magnetic flux between the rotor and the stator runs parallel to the mechanical shaft. Axial flux machines can have several advantages over radial flux machines, including compact machine construction, high power density, and a more robust structure. However various problems remain to be addressed, including stator retention and cooling of the machine.

In an axial flux rotating electrical machine it is necessary to provide some means for holding the stator in place. Previously considered arrangements for holding the stator have involved the use of two retention ring components which are brought together around the stator. The retention ring components have teeth which clamp the stator in place. However, various problems have been identified with such arrangements. Firstly, the use of two retention rings requires two castings and multiple machined surfaces which increases the production cost of the machine. Secondly, the teeth which clamp the stator may experience eddy current losses as they are in the main magnetic field of the machine. Thirdly, when assembling the stator the retention ring may damage the stator end windings since it is in close contact with the stator. Fourthly, under short circuit conditions, the stator may rotate within the retention ring, damaging the windings.

WO 94/22204 discloses an axial flux machine comprising a pair of separate lamination cores located on either side of a heat sink. Armature coils are wound across and through the lamination cores. The heat sink is connected to two endplates by means of outer spacers.

JP 2006-271161 discloses a stator which includes a core having an annular shape in a peripheral direction, and stator windings. The core projects to the outer peripheral side from the windings in a plurality of specified positions.

US 2004/0195932 discloses an electrical machine which includes first and second magnetically permeable parallel cores. Each core is elongated to thereby define a lengthwise direction and first and second core profiles transverse to the lengthwise direction. First coils are wound about the first core profile and sequentially disposed along the length of the first core. Second coils are wound about the second core profile and sequentially disposed along the length of the second core. A multi-pole elongated permanent magnet is parallel with the cores and located between them.

According to a first aspect of the present invention there is provided an axial flux rotating electrical machine as defined in claim 1.

According to a second aspect of the present invention there is provided a method of assembling an axial flux rotating electrical machine as defined in claim 13.

Preferred features of the present invention are recited in the dependent claims.

By providing extended fins which extend radially outwards and which secure the stator to the machine, the stator assembly may be secured to the machine without the need for direct contact with the stator, which may help to reduce eddy current losses. Furthermore, a positive retention method is provided, which may help to prevent stator rotation. In addition, the stator windings can easily be wound on to the stator and cooling jacket, by locating the windings between the protrusions.

The extended fins may have holes for securing the cooling jacket to the machine. For example, the extended fins may be used to bolt, rivet or screw the cooling jacket to the machine.

The machine may be an enclosed axial flux machine. Enclosed machines have various advantages, including reduced susceptibility to contamination.

The cooling jacket may comprise a passage for the flow of coolant, the passage comprising a passage for the flow of coolant, the passage comprising grooves which introduce turbulence into the flow of coolant.

By providing grooves which introduce turbulence into the flow of coolant, the transfer of heat from the stator to the coolant may be improved. Furthermore, it has been found that the use of grooves can allow turbulence to be introduced while causing a relatively low pressure drop in the coolant, compared to the case where for example protrusions are provided in the passage.

The grooves may introduce different amounts of turbulence in different parts of the passage. For example, the grooves may be arranged to introduce an increasing amount of turbulence through the passage in the direction of coolant flow. Preferably, the grooves are arranged such that a similar level of heat transfer is achieved throughout the cooling jacket. This may help to ensure uniform cooling of the stator, which may allow the machine to operate more efficiently and/or at a higher rating.

For example, some grooves may run at different angles to the flow of coolant from other grooves, and/or some grooves may be more closely spaced than others. In one embodiment, grooves running substantially parallel to the flow of coolant are provided in a first part of the cooling jacket (with regard to the flow of coolant), and grooves running substantially perpendicular to the flow of coolant are provided in a second part of the cooling jacket.

The cooling jacket is preferably hollow to provide the passage through which the coolant flows. In one embodiment, the cooling jacket is formed from two sections which, when pressed together, form an annular cavity. In this case the two sections may be sealed by at least one O-ring seal, and preferably two O-ring seals. The two sections may be at least partially held together by stator windings. This can allow the two sections to be joined together without the need for welding, which may reduce the manufacturing cost.

The fins conduct heat away from the stator windings and towards, for example, a coolant in the centre of the cooling jacket. Thus the fins act as a heat sink for the stator windings. This arrangement can thus help to cool the stator effectively.

The fins may be, for example, semi-cylindrical or any other suitable shape, and may lie on a ring around the outside of the cooling jacket. The fins define slots which accommodate stator windings. This may create a relatively large contact area between the windings and the fins, which may assist in cooling the windings.

Stators for axial flux machines may have overhang windings running around their outside circumference. Preferably the fins extend outwards radially such that, when the stator is wound, overhang windings rest on the fins. This may be achieved by ensuring that the stator windings are completely accommodated in the slots between the fins. In this way the fins may act as a heat sink for the overhang windings.

In order to cool windings on the inside of the stator, the cooling jacket may further comprise a plurality of fins which extend radially inward of the stator.

The extended fins may have holes for securing the cooling jacket to the machine. For example, the extended fins may be used to bolt, rivet or screw the cooling jacket to the machine. Thus a positive retention method, rather than clamping, may be used to retain the stator assembly, which may help to prevent stator rotation.

The axial flux rotating electrical machine may comprise a machine housing, a stator, a cooling jacket in any of the forms described above, and an inlet pipe for supplying coolant to and from the cooling jacket, wherein the inlet pipe and outlet pipe are integrated with the machine housing. This may facilitate the supply of coolant to the cooling jacket, reduce the number of components, and simplify manufacture of the machine.

The stator and/or cooling jacket may comprise open slots for accommodating the stator windings. This may facilitate winding of the stator windings.

The stator assembly may further comprise roll pins inserted between the cooling jacket and the stator. This may help to reduce the risk of stator rotation.

The machine may further comprise a retention ring, and the cooling jacket may be secured to the retention ring. The retention ring may be secured to the machine, or it may be integrated with the machine, for example, as part of a machine housing.

The retention ring may comprise a plurality of teeth aligned with the extended fins on the cooling jacket. This can allow the stator assembly to be held using a single retention ring, rather than being clamped between two retention rings, which may reduce the cost and complexity of the machine. Since the retention ring is fixed to the cooling jacket, rather than clamping the stator, the retention ring is not in the machine's main magnetic field. Thus this arrangement may help to reduce eddy current losses. Furthermore, since the retention ring is fixed to the cooling jacket rather than the stator, the risk of damaging the stator windings is reduced.

The machine may further comprise a machine housing, and the stator may be enclosed within and/or secured to the machine housing. The retention ring may be integrated with the machine housing, or some other form of mounting may be provided in the housing. By forming the retention features as an integrated part of the housing for the electrical machine, the ease of assembly may be improved and the part count and cost of manufacture may be reduced.

The machine may further comprise an inlet pipe and an outlet pipe for supplying coolant to and from the cooling jacket, and the inlet pipe and outlet pipe may be integrated with the machine housing. This may facilitate the supply of coolant to the cooling jacket, reduce the number of components, and simplify manufacture of the machine.

Where the axial flux machine is to be connected to or integrated with an engine, then it may be possible for the cooling jacket to be integrated with the engine's cooling system, so that the coolant which cools the engine is also passed through the cooling jacket to cool the axial flux machine. Thus the cooling jacket may be arranged to be connected to an engine cooling system. This can allow a single cooling system to be provided for both the engine and the machine, which may reduce the number of components, and help to provide a compact unit.

As discussed above, it may be desirable to produce an axial flux machine as an enclosed unit. If the axial flux machine is to be connected to an engine in order to operate as a generator set, then a further level of integration can be achieved by producing the engine and the machine as an enclosed unit. For example, the axial flux machine may replace the engine flywheel, and may sit inside the flywheel housing. This can reduce the number of components, and provide a highly compact unit.

Thus the engine may have a flywheel housing, and the electric machine may be integrated in the engine flywheel housing.

Features of one aspect of the invention may be provided with any other aspect. Any of the apparatus features may be provided as method features and *vice versa*.

Preferred features of the present invention will now be described, purely by way of example, with reference to the accompanying drawings, in which:
Figure 1 shows parts of an axial flux rotating electrical machine;
Figures 2A to 2C show parts of a stator and cooling jacket;
Figures 3A to 3E show an embodiment of a cooling jacket;
Figures 4A to 4D show parts of a stator retention assembly;
Figures 5 and 6 show embodiments of a machine with inlet and outlet pipes integrated in the machine housing; and
Figure 7 shows an embodiment of a machine with a stator retention ring integrated with the machine housing.

### Overview

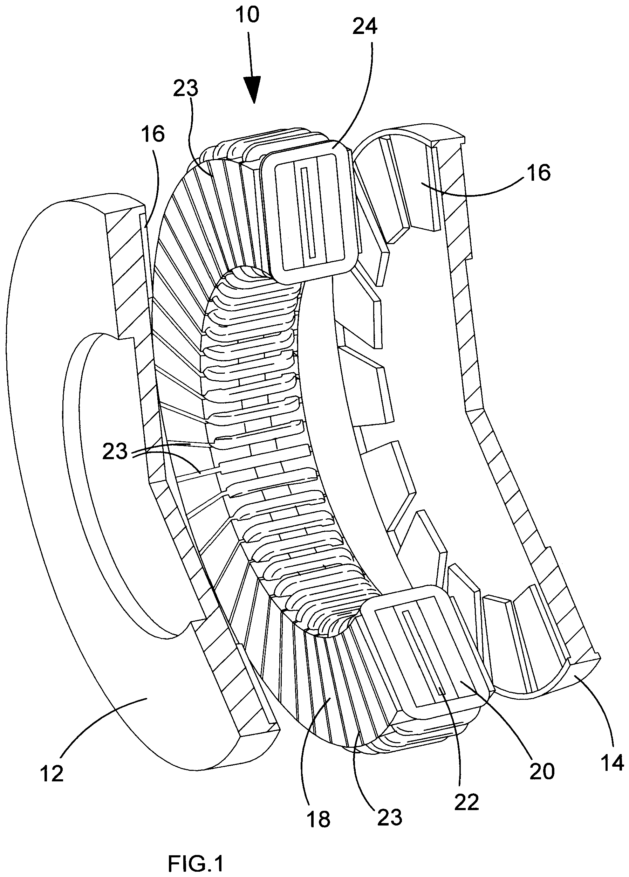

Figure 1 shows parts of an axial flux rotating electrical machine. Referring to Figure 1, the machine comprises a stator 10 sandwiched between two rotor discs 12, 14. The stator 10 consists of two slotted laminated toroids 18, 20 with a cooling jacket 22 sandwiched between the two. The two stator toroids 18, 20 may be manufactured by rolling a single strip of magnetic steel sheet. Slots are formed on one side by an indexed punching machine as the rolling process takes place. Stator windings 24 are wound in the slots in the finished stator.

The rotor discs 12, 14 are mounted on a common shaft, and may be entirely ferromagnetic. Each disc carries a set of permanent magnets 16 with alternate north and south poles directed axially toward the stator. The rotor does not carry alternating flux and it can be constructed conveniently from cast iron. The permanent magnets 16 are preferably sintered Neodymium-Iron-Boron, providing a high magnetic loading, leading to a compact machine design.

The axial machine 10 may be operated either as a generator or as a motor, or both.

### Stator cooling

Referring to Figure 1, it can be seen that the stator 10 is at the centre of the machine, and therefore is likely to experience the highest temperatures. In the arrangement of Figure 1, a cooling jacket 22 is provided in order to cool the stator.

In the arrangement of Figure 1, the stator 10 is formed from two parts 18, 20 with the cooling jacket 22 sandwiched between the two. The cooling jacket is disc-shaped, and is hollow to allow a cooling fluid to be circulated through it. Inlet and outlet pipes (not shown in Figure 1) are provided to allow the cooling fluid to enter and exit the cooling jacket. Any type of cooling fluid may be used, such as engine coolant. The cooling jacket 22 is manufactured from a strong, non-magnetic, heat-conducting material such as aluminium. In one embodiment the cooling jacket is formed from two discs of aluminium which are welded together.

The cooling jacket 22 cools the machine at what is otherwise likely to be the hottest part, namely the centre of the machine. As a consequence it may be possible to rely on the cooling jacket to cool the whole machine. In this case, the machine may be manufactured as a totally enclosed unit.

Conventional rotating electrical machines suffer from the problem that contaminants such as sand and salt may enter the machine, reducing the machine's durability. With permanent magnet machines, the problem of contamination is even more serious, because contaminants can react with the magnets, causing them to rust and deteriorate. A totally enclosed unit has the advantage of being less susceptible to contamination, which may increase the machine's durability. A totally enclosed machine may also be packaged more effectively, as no allowance need be made for air cooling. Furthermore, a totally enclosed unit may be safer, as total containment of rotating components is possible. In addition, a totally enclosed unit may emit less electromagnetic interference, saving the expense of EMI screening.

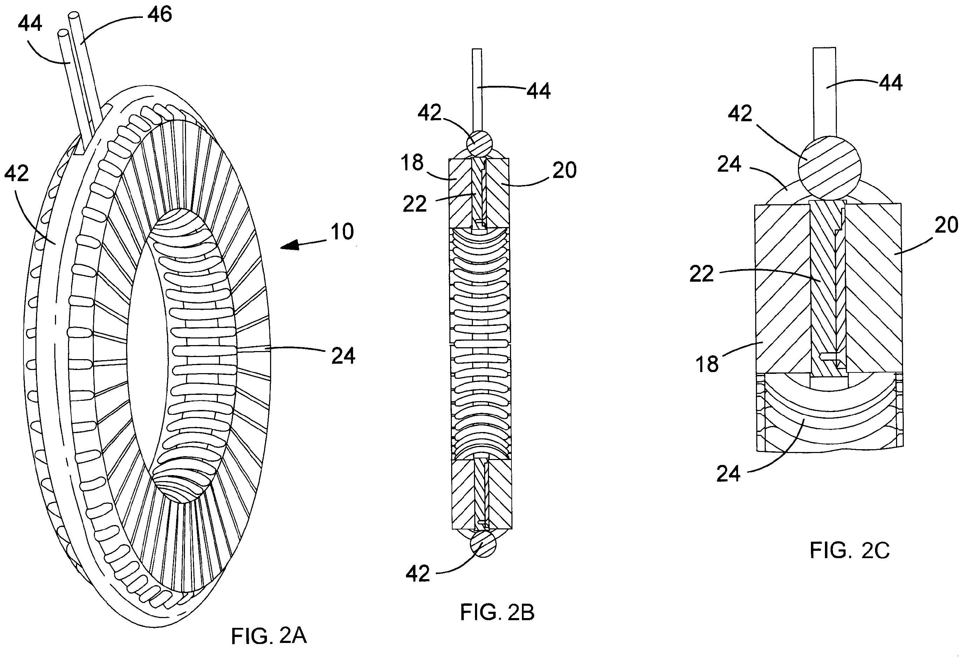

Figures 2A to 2C show parts of the stator 10 and cooling jacket 22 in more detail. Figure 2A shows the stator 10 with windings 24 in place. Overhang windings 42 are located around the circumference of the stator. An inlet pipe 44 and outlet pipe 46 take coolant into and out of the cooling jacket in the centre of the stator.

Figure 2B shows a cross sectional view of the stator. The stator is formed of two slotted ring-shaped discs 18, 20 with the cooling jacket 22 sandwiched between the two. Figure 2C shows the contact surface of the cooling jacket 22 with the stator in more detail. It can be seen that there is only minimal contact between the overhang windings 42 and the cooling jacket 22. This may mean that the overhang windings may not be cooled effectively, which may reduce the efficiency of the machine.

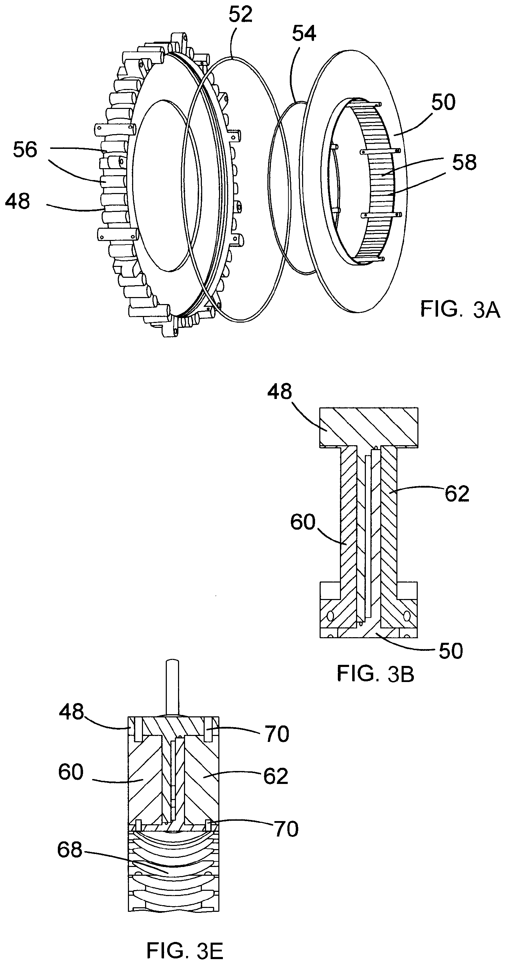

An embodiment of the cooling jacket is shown in Figures 3A-3E. The cooling jacket of Figures 3A-3E is designed to be more effective in cooling the machine.

Figure 3A shows an exploded view of the cooling jacket. Referring to Figure 3A, the cooling jacket is formed from two sections 48, 50 which, when pressed together, form an annular cavity in their centre. Each of the two sections 48, 50 has two circular grooves which accommodate O-rings 52, 54. The O-rings seal the two sections 48, 50, so that coolant flowing in the cavity will not leak out.

The first section 48 of the cooling jacket carries a plurality of heat sink fins 56 around its circumference. The fins 56 are in the form of axially-running semi-cylinders on a ring around the outside surface of the first section. The space between the fins is designed to accommodate the stator windings. The outside surface of the cooling jacket between the fins is curved to fit with the curvature of the windings. Every sixth fin is longer than the others in the axial direction, and has a hole at each end.

The second section 50 of the cooling jacket has similar, but smaller, fins 58 around its inside edge. The fins 58 are in the form of axially-running semi-cylinders around the inside surface of the first section. The spaces between the fins 58 are designed to accommodate the inside of the stator windings, and the inside surface between the fins is curved to fit with the curvature of the windings. Some of the fins 58 are extended, and have bolt holes through the extended portions.

Thus, the assembled cooling jacket has an essentially annular shape, with axially running fins on both the inside and outside surfaces, and curved surfaces between the fins.

Figure 3B shows a cross sectional view of part of the assembled cooling jacket in place inside the stator. The cross section of Figure 3B is taken through the extended fins. The two sections 48, 50 of the cooling jacket are pushed together between two stator sections 60, 62. The bolt holes in the extended fins on the second section may be used to help secure the cooling jacket to the stator.

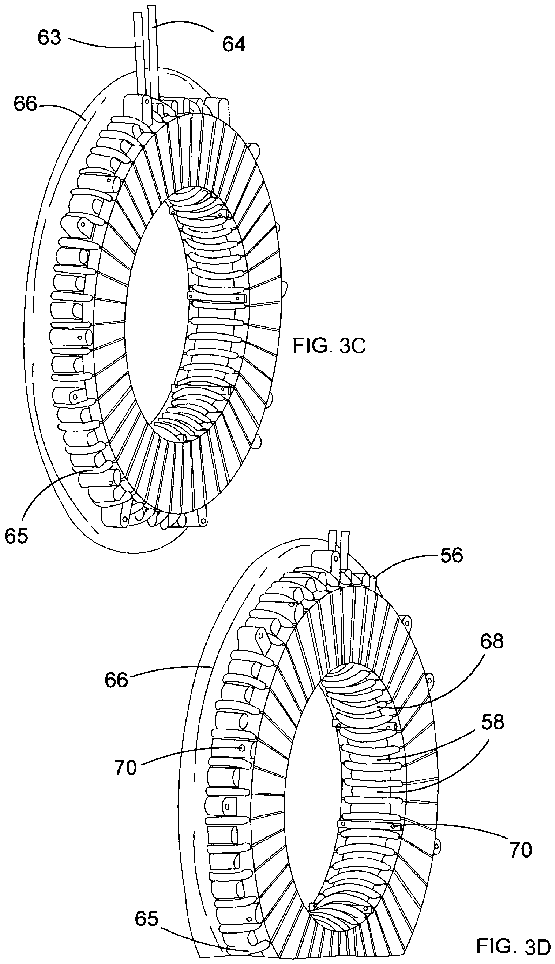

Figure 3C shows the stator with windings 65 and overhang windings 66 in place. The windings sit on the curved surfaces between the fins on both the inside and outside of the cooling jacket. The windings help to hold the stator and cooling jacket together. An inlet pipe 63 and outlet pipe 64 take coolant into and out of the cooling jacket.

Figure 3D shows a more detailed view of the stator assembly. It can be seen that the windings 65 slot into the grooves between the fins 56, while the overhang windings 66 lie on top of the fins 56. Thus the fins 56 have a relatively large contact area with the windings 65, 66. The fins 56 act as a heat sink feature, and conduct heat away from the windings towards the coolant in the cooling jacket. The inside windings 68 slot into the grooves between the inside fins 58, and thus the inside fins conduct heat away from the inside windings.

In order to prevent rotation of the stator, roll pins 70 are inserted through the holes in the longer fins into the stator. Figure 3E shows a cross sectional view of the stator with the roll pins 70 in place.

The modified cooling jacket shown in Figures 3A-3E may provide better cooling due to the extension of the inner and outer diameter of the cooling jacket. The cooling jacket has a larger contact area with the windings, which increases cooling efficiency. The production method may be cheaper, since most of the features can be cast which avoids the expense of machining. Furthermore, the two sections of the cooling jacket can be joined together without the need for welding. The cooling jacket is preferably made from a strong, non-magnetic, heat conducting material such as aluminium.

The axial flux machine described above may be connected to an engine in order to be driven as a generator. In this case, the cooling jacket may be connected to the engine's cooling system, so that the engine's coolant is also passed through the cooling jacket. This can remove the need to provide a separate cooling system (pump, radiator etc.) for the cooling jacket.

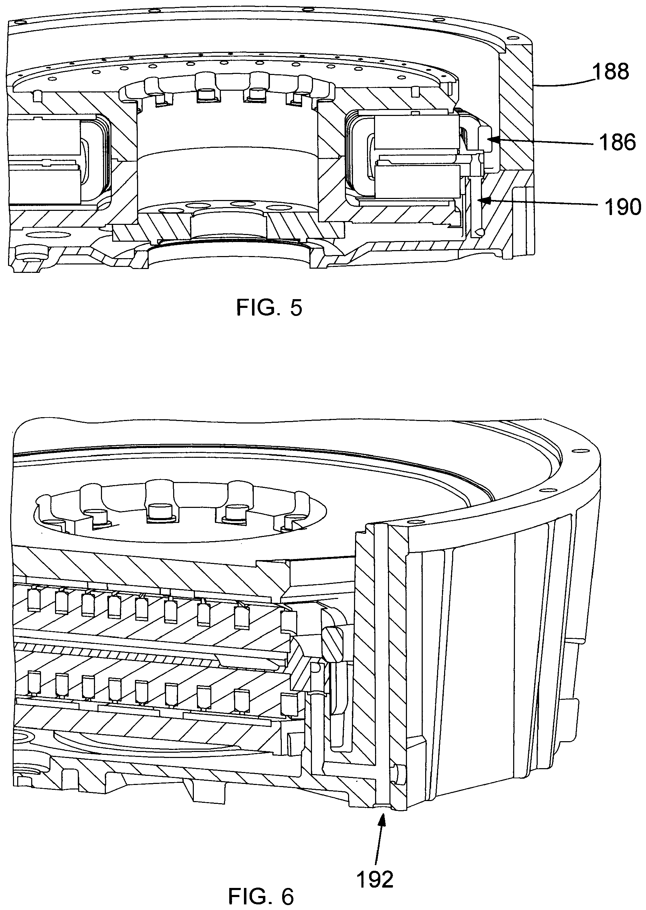

Figure 5 shows another embodiment, in which the inlet and outlet pipes are integrated with the heatsink and the machine housing. Referring to Figure 5, the stator 186 is shown in place inside the machine housing 188. An inlet pipe 190 is provided inside the machine for taking coolant into the stator cooling jacket. A similar outlet pipe is also provided for taking coolant out of the stator cooling jacket. This arrangement can allow the total number of components to be reduced, and assembly of the machine to be simplified.

Figure 6 shows another embodiment with integrated inlet and outlet pipes. Referring to Figure 6, a coolant path 192 is provided as part of the heatsink and machine housing, which can facilitate the supply of coolant from outside of the machine to and from the cooling jacket.

### Stator retention

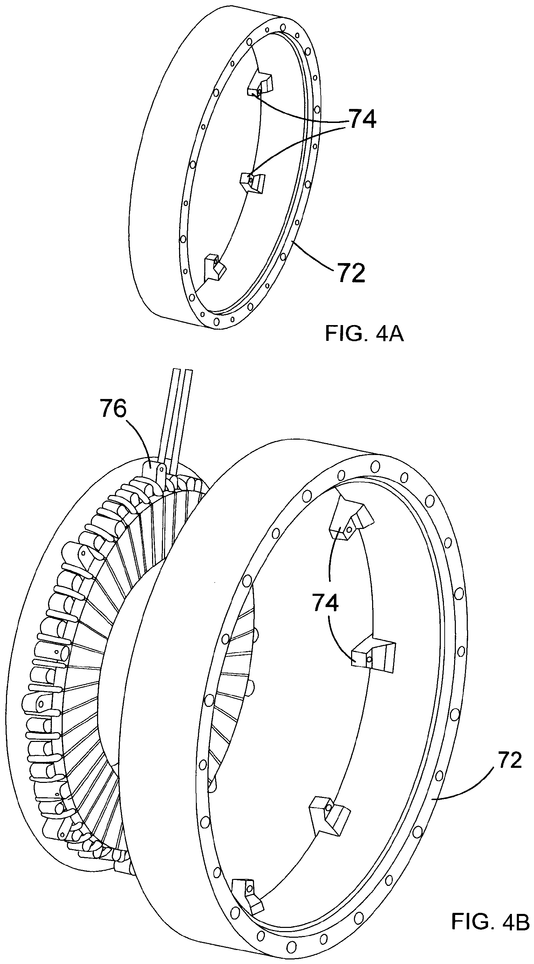

Referring back to the schematic diagram of an axial flux machine in Figure 1, it can be seen that some arrangement is need to hold the stator 10 in place. Figures 4A-4D show parts of a stator retention assembly.

Figure 4A shows a retaining ring which may be used to retain a stator assembly. The retaining ring has a plurality of teeth 74 extending radially inwards on one edge.

Figure 4B shows an exploded view of the stator assembly and the retaining ring. The stator assembly is formed from a cooling jacket sandwiched between two stator sections, as discussed above with reference to Figures 3A-3E. As can be seen from Figure 4B, some of the fins on the outside part of the cooling jacket extend outwards in a radial direction next to the overhang windings. The teeth 74 of the retaining ring 72 are designed to engage with the extended fins 76.

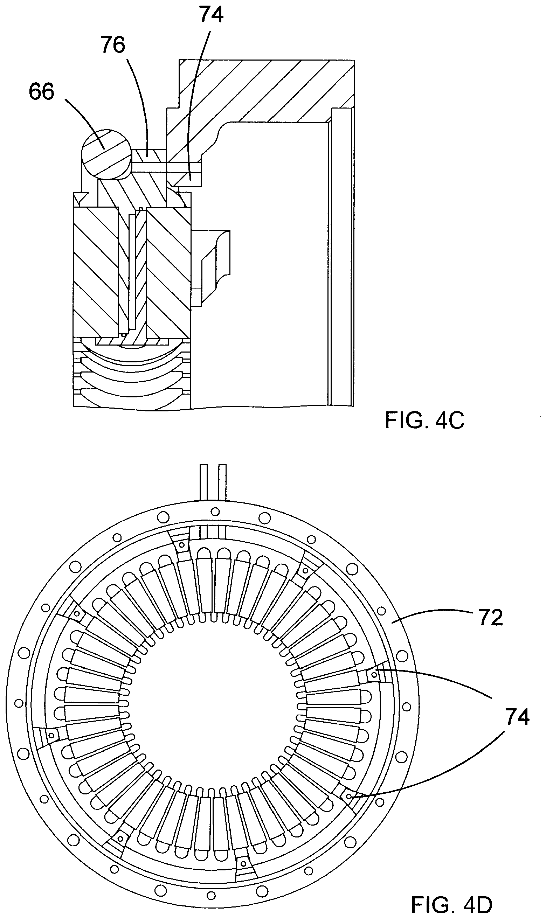

Figure 4C is a cross sectional view of the stator assembly in place on the retaining ring. As can be seen from Figure 4C, holes in the retaining ring teeth 74 are aligned with holes in the extended fins 76. This allows the stator assembly to be bolted to the retaining ring. An end view of the assembled stator and retaining ring is shown in Figure 4D.

In the stator retention assembly shown in Figures 4A-4D, the stator assembly is held in place by bolting the cooling jacket to the retention ring, rather than clamping the stator. This means that the retaining ring is not in the main magnetic field, which reduces eddy current losses. Furthermore, by bolting the stator assembly rather than clamping it, the risk of stator rotation under short circuit conditions is reduced. Roll pins are inserted between the cooling jacket and stator as shown in Figure 3E, to further reduce the risk of stator rotation. Since the retention ring is not in direct contact with the stator, the risk of damaging the stator end windings is reduced. Furthermore, the retention assembly shown in Figures 4A-4D is easier to assemble than the previously considered techniques, and uses fewer components.

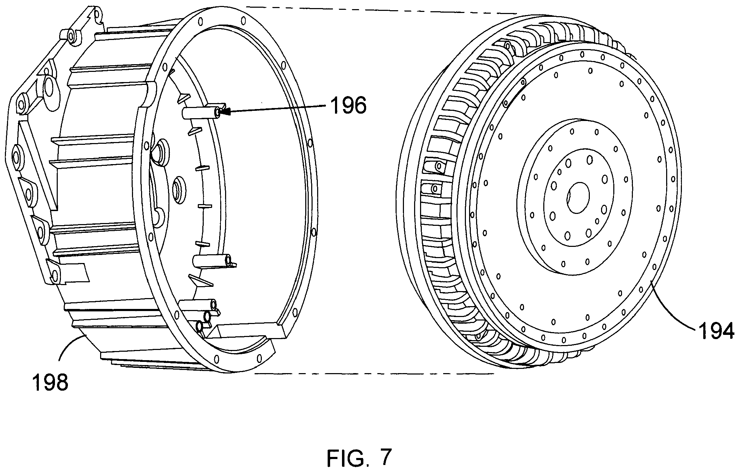

Figure 7 shows another embodiment in which the stator retention ring is integrated with the machine housing. In this embodiment, the stator assembly 194 is retained by bolting the cooling jacket directly to mountings 196 in the machine housing 198. This reduces the number of parts and facilitates manufacture of the machine.

## Claims

1. An axial flux rotating electrical machine comprising:
a stator (10);
a cooling jacket (22) inside the stator for cooling the stator; and
stator windings (24) around the stator and the cooling jacket;
**characterised in that**:
the cooling jacket (22) comprises a plurality of fins (56, 76) which extend beyond the circumference of the stator, wherein the fins define slots which accommodate the stator windings and the fins act as heat sinks for the stator windings;
some of the fins (76) extend outwards in a radial direction by a greater amount than the other fins (56); and
the extended fins (76) are used for securing the stator (10) to the machine.

2. An axial flux machine according to claim 1, wherein at least some of the fins (56, 76) define open slots which accommodate stator windings.

3. An axial flux machine according to claim 1 or 2, wherein the fins (56) extend radially outwards such that, when the stator is wound, overhang windings (66) rest on the fins.

4. An axial flux machine according to any of the preceding claims, wherein the fins (56) are in the form of axially-running semi-cylinders.

5. An axial flux machine according to any of the preceding claims, wherein the stator (10) comprises open slots for accommodating the stator windings.

6. An axial flux machine according to any of the preceding claims, further comprising roll pins (70) inserted between the cooling jacket and the stator.

7. An axial flux machine according to any of the preceding claims, further comprising a retention ring (72), wherein the cooling jacket (22) is secured to the retention ring (72).

8. An axial flux machine according to claim 7, wherein the retention ring (72) comprises a plurality of teeth (74) aligned with the extended fins (76) on the cooling jacket.

9. An axial flux machine according to any of the preceding claims, further comprising a machine housing, wherein the stator is enclosed within and/or secured to the machine housing.

10. An axial flux machine according to claim 9 when dependent on claim 7 or 8, wherein the retention ring (72) is integrated with the machine housing.

11. An axial flux machine according to claim 10, further comprising an inlet pipe (44) and an outlet pipe (46) for supplying coolant to and from the cooling jacket, wherein the inlet pipe and outlet pipe are integrated with the machine housing.

12. A method of assembling an axial flux rotating electrical machine, the method comprising:
providing a stator assembly (10) comprising two stator parts (18, 20);
providing a cooling jacket (22);
placing the cooling jacket (22) between the two stator parts (18, 20);
winding stator windings (24) around the stator and cooling jacket; and
securing the stator assembly (10) to the machine;
**characterised in that**:
the cooling jacket (22) comprises a plurality of fins (56, 76) which extend beyond the circumference of the stator, wherein the fins define slots which accommodate the stator windings and the fins act as heat sinks for the stator windings;
some of the fins (76) extend outwards in a radial direction by a greater amount than the other fins (56); and
the extended fins (76) are used for securing the stator (10) to the machine.

13. A method according to claim 12, wherein the step of winding the stator windings (24) comprises winding stator windings (65) into open slots between the fins.

## Patentansprüche

1. Eine Axialfluss rotierende elektrische Maschine, umfassend:
einen Stator (10);
einen Kühlmantel (22) innerhalb des Stators zum Kühlen des Stators; und
Statorwicklungen (24) um den Stator und den Kühlmantel herum;
**dadurch gekennzeichnet, dass**:
der Kühlmantel (22) eine Vielzahl an Rippen (56, 76) umfasst, welche sich über den Umfang des Stators hinaus erstrecken, wobei die Rippen Schlitze definieren, welche die Statorwicklungen aufnehmen, und die Rippen als Wärmesenken für die Statorwicklungen wirken;
einige der Rippen (76) sich in einer Radialrichtung um einen größeren Betrag als die anderen Rippen (56) nach außen erstrecken; und
die verlängerten Rippen (76) zum Sichern des Stators (10) an der Maschine verwendet werden.

2. Eine Axialflussmaschine gemäß Anspruch 1, wobei wenigstens einige der Rippen (56, 76) offene Schlitze definieren, welche die Statorwicklungen aufnehmen.

3. Eine Axialflussmaschine gemäß Anspruch 1 oder 2, wobei die Rippen (56) sich radial nach außen erstrecken, so dass, wenn der Stator gewickelt ist, Überhangwicklungen (66) auf den Rippen ruhen.

4. Eine Axialflussmaschine gemäß einem der vorherigen Ansprüche, wobei die Rippen (56) in der Form axial verlaufender Halbzylinder sind.

5. Eine Axialflussmaschine gemäß einem der vorherigen Ansprüche, wobei der Stator (10) offene Schlitze zum Aufnehmen der Statorwicklungen umfasst.

6. Eine Axialflussmaschine gemäß einem der vorherigen Ansprüche, ferner umfassend Spannstifte (70), die zwischen den Kühlmantel und den Stator eingeschoben sind.

7. Eine Axialflussmaschine gemäß einem der vorherigen Ansprüche, ferner umfassend einen Rückhaltering (72), wobei der Kühlmantel (22) an den Rückhaltering (72) gesichert ist.

8. Eine Axialflussmaschine gemäß Anspruch 7, wobei der Rückhaltering (72) eine Vielzahl an Zähnen (74) umfasst, die mit den verlängerten Rippen (76) auf dem Kühlmantel fluchtend sind.

9. Eine Axialflussmaschine gemäß einem der vorherigen Ansprüche, ferner umfassend ein Maschinengehäuse, wobei der Stator innerhalb des Maschinengehäuses eingeschlossen und/oder an dem Maschinengehäuse gesichert ist.

10. Eine Axialflussmaschine gemäß Anspruch 9, wenn von Anspruch 7 oder 8 abhängig, wobei der Rückhaltering (72) in dem Maschinengehäuse integriert ist.

11. Eine Axialflussmaschine gemäß Anspruch 10, ferner umfassend ein Einlassrohr (44) und ein Auslassrohr (46) zum Versorgen mit Kühlmittel zu und von dem Kühlmantel, wobei das Einlassrohr und Auslassrohr in dem Maschinengehäuse integriert sind.

12. Ein Verfahren zum Zusammenbauen einer Axialfluss rotierenden elektrischen Maschine, das Verfahren umfassend:
Bereitstellen einer Statorbaugruppe (10), die zwei Statorteile (18, 20) umfasst;
Bereitstellen eines Kühlmantels (22);
Platzieren des Kühlmantels (22) zwischen den zwei Statorteilen (18, 20);
Wickeln der Statorwicklungen (24) um den Stator und Kühlmantel herum; und
Sichern der Statorbaugruppe (10) an der Maschine;
**dadurch gekennzeichnet, dass**:
der Kühlmantel (22) eine Vielzahl an Rippen (56 76) umfasst, welche sich über den Umfang des Stators hinaus erstrecken, wobei die Rippen Schlitze definieren, welche die Statorwicklungen beherbergen, und die Rippen als Wärmesenken für die Statorwicklungen wirken;
einige der Rippen (76) sich in einer Radialrichtung um einen größeren Betrag als die anderen Rippen (56) nach außen erstrecken; und
die verlängerten Rippen (76) zum Sichern des Stators (10) an der Maschine verwendet werden.

13. Ein Verfahren gemäß Anspruch 12, wobei der Schritt des Wickelns der Statorwicklungen (24) Wickeln der Statorwicklungen (65) in die offenen Schlitze zwischen den Rippen hinein umfasst.

## Revendications

1. Machine électrique rotative à flux axial comprenant :
un stator (10) ;
une chemise de refroidissement (22) à l'intérieur du stator pour refroidir le stator ; et
des enroulements de stator (24) autour du stator et de la chemise de refroidissement ;
**caractérisée en ce que** :
la chemise de refroidissement (22) comprend une pluralité d'ailettes (56, 76) qui s'étendent au-delà de la circonférence du stator, les ailettes définissent des fentes qui reçoivent les enroulements de stator et les ailettes agissent comme des dissipateurs de chaleur pour les enroulements de stator ;
certaines des ailettes (76) s'étendent vers l'extérieur dans une direction radiale de manière plus importante que les autres ailettes (56) ; et
les ailettes étendues (76) sont utilisées pour fixer le stator (10) à la machine.

2. Machine à flux axial selon la revendication 1, dans laquelle au moins certaines des ailettes (56, 76) définissent des fentes ouvertes qui reçoivent des enroulements de stator.

3. Machine à flux axial selon la revendication 1 ou 2, dans laquelle les ailettes (56) s'étendent radialement vers l'extérieur de sorte que, lorsque le stator est enroulé, des enroulements en surplomb (66) reposent sur les ailettes.

4. Machine à flux axial selon l'une quelconque des revendications précédentes, dans laquelle les ailettes (56) ont la forme de semi-cylindres s'étendant axialement.

5. Machine à flux axial selon l'une quelconque des revendications précédentes, dans laquelle le stator (10) comprend des fentes ouvertes pour recevoir les enroulements de stator.

6. Machine à flux axial selon l'une quelconque des revendications précédentes, comprenant en outre des goupilles fendues (70) insérées entre la chemise de refroidissement et le stator.

7. Machine à flux axial selon l'une quelconque des revendications précédentes, comprenant en outre une bague de retenue (72), dans laquelle la chemise de refroidissement (22) est fixée à la bague de retenue (72).

8. Machine à flux axial selon la revendication 7, dans laquelle la bague de retenue (72) comprend une pluralité de dents (74) alignées avec les ailettes étendues (76) sur la chemise de refroidissement.

9. Machine à flux axial selon l'une quelconque des revendications précédentes, comprenant en outre un boîtier de machine, dans laquelle le stator est enfermé à l'intérieur du boîtier de machine et/ou fixé à celui-ci.

10. Machine à flux axial selon la revendication 9 lorsqu'elle dépend de la revendication 7 ou 8, dans laquelle la bague de retenue (72) est intégrée au boîtier de machine.

11. Machine à flux axial selon la revendication 10, comprenant en outre un tuyau d'entrée (44) et un tuyau de sortie (46) pour délivrer un liquide de refroidissement vers et depuis la chemise de refroidissement, dans laquelle le tuyau d'entrée et le tuyau de sortie sont intégrés au boîtier de machine.

12. Procédé d'assemblage d'une machine électrique rotative à flux axial, le procédé comprenant les étapes consistant à :
fournir un ensemble de stator (10) comprenant deux parties de stator (18, 20) ;
fournir une chemise de refroidissement (22) ;
placer la chemise de refroidissement (22) entre les deux parties de stator (18, 20) ;
enrouler des enroulements de stator (24) autour du stator et de la chemise de refroidissement ; et
fixer l'ensemble de stator (10) à la machine ;
**caractérisé en ce que** :
la chemise de refroidissement (22) comprend une pluralité d'ailettes (56, 76) qui s'étendent au-delà de la circonférence du stator, les ailettes définissant des fentes qui reçoivent les enroulements de stator et les ailettes agissant comme des dissipateurs de chaleur pour les enroulements de stator ;
certaines des ailettes (76) s'étendent vers l'extérieur dans une direction radiale d'une manière plus importante que les autres ailettes (56) ; et
les ailettes étendues (76) sont utilisées pour fixer le stator (10) à la machine.

13. Procédé selon la revendication 12, dans lequel l'étape d'enroulement des enroulements de stator (24) comprend l'enroulement des enroulements de stator (65) dans des fentes ouvertes entre les ailettes.
